(19) Europäisches Patentamt

European Patent Office

Office européen des brevets

(11) **EP 3 926 546 A2**

(12) **EUROPEAN PATENT APPLICATION**
published in accordance with Art. 153(4) EPC

(43) Date of publication:
**22.12.2021 Bulletin 2021/51**

(51) Int Cl.:
***G06N 3/08*** (2006.01)

(21) Application number: **20756078.0**

(22) Date of filing: **13.04.2020**

(86) International application number:
**PCT/CN2020/084416**

(87) International publication number:
**WO 2020/164644 (20.08.2020 Gazette 2020/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.02.2019 CN 201910114927
14.02.2019 CN 201910115130
14.02.2019 CN 201910115162
14.02.2019 CN 201910114967**

(71) Applicant: **Shanghai Cambricon Information
Technology Co., Ltd
Shanghai 201306 (CN)**

(72) Inventors:
• **ZHOU, Yusong**
**Shanghai 201306 (CN)**
• **ZHANG, Xiao**
**Shanghai 201306 (CN)**
• **WU, Linyang**
**Shanghai 201306 (CN)**
• **YU, Yehao**
**Shanghai 201306 (CN)**
• **XU, Yunlong**
**Shanghai 201306 (CN)**

(74) Representative: **Huang, Liwei
Cäcilienstraße 12
40597 Düsseldorf (DE)**

Remarks:
The restoration of the right of priority granted by the receiving Office is effective before the EPO (R. 49ter.1(a) PCT).

(54) **NEURAL NETWORK MODEL SPLITTING METHOD, APPARATUS, COMPUTER DEVICE AND STORAGE MEDIUM**

(57) The present disclosure provides a neural network model splitting method and related products. The scheme provided by the present disclosure splits an operator into a plurality of smaller-scale sub-operators, so that a compute library under a single-core architecture can be called directly, which helps to avoid the extra work caused by re-implementation.

according to an operator of a target layer in the neural network model, determining a splitting state set of tensor data associated with the operator of the target layer, where the target layer is at least one layer in the neural network model — 201

traversing the splitting state set according to a directed acyclic graph of the neural network model, and determining a state path between adjacent splitting state sets and a weight of the state path, where the state path represents a splitting method of the operator, each state in the splitting state set represents a set of sub-tensor data, and a union result of all sub-tensor data represented by the states is the tensor data — 202

determining a target splitting path of the target layer according to the weight of the state path — 203

splitting the operator of the target layer in the neural network model by using the target splitting path — 204

FIG. 2

## Description

### RELATED APPLICATION

This application claims the benefits and priorities of Chinese Patent Application No. 201910114927.0 with the title of "Neural Network Model Splitting Method and Related Products" filed on Feb. 14, 2019, Chinese Patent Application No. 201910114967.5 with the title of "Neural Network Model Splitting Method and Related Products" filed on Feb. 14, 2019, Chinese Patent Application No. 201910115130.2 with the title of "Neural Network Model Splitting Method and Related Products" filed on Feb. 14, 2019, and Chinese Patent Application No. 201910115162.2 with the title of "Neural Network Model Splitting Method and Related Products" filed on Feb. 14, 2019, the entire contents of which are incorporated herein by reference in their entireties.

### TECHNICAL FIELD

The present disclosure relates to the field of artificial intelligence technology, and in particular relates to a neural network model splitting method and related products.

### BACKGROUND

In recent years, deep learning accelerators have been proposed and, similar to general-purpose processors, are developing from a single-core architecture to a multi-core architecture. This expanded multi-core architecture can support data parallel in the training phase to improve data throughput and speed up training. However, in the inference phase, deep neural networks have higher requirements for end-to-end latency than throughput, which often determines the availability of accelerators in a certain scenario. Traditional data parallel schemes fail to meet the requirements for small batch and low latency of accelerators in the inference scenario.

### SUMMARY

In view of the situation above, it is necessary to provide a neural network model splitting method and related products to overcome the technical problems.

The present disclosure provides a neural network model splitting method to realize the above-mentioned purpose. The method includes:

according to an operator of a target layer in a neural network model, determining a splitting state set of tensor data associated with the operator of the target layer, where the target layer is at least one layer in the neural network model;
traversing the splitting state set according to a directed acyclic graph of the neural network model, and determining a state path between adjacent splitting state sets and a weight of the state path, where the state path represents a splitting method of the operator, each state in the splitting state set represents a set of sub-tensor data, and a union result of all sub-tensor data represented by the states is the tensor data;
determining a target splitting path of the target layer according to the weight of the state path; and
splitting the operator of the target layer in the neural network model by using the target splitting path.

The present disclosure provides a neural network model splitting apparatus to realize the above-mentioned purpose. The apparatus includes:

a splitting state set module configured to, according to an operator of a target layer in a neural network model, determine a splitting state set of tensor data associated with the operator of the target layer, where the target layer is at least one layer in the neural network model;
a state path module configured to traverse the splitting state set according to a directed acyclic graph of the neural network model, and determine a state path between adjacent splitting state sets and a weight of the state path, where the state path represents a splitting method of the operator, each state in the splitting state set represents a set of sub-tensor data, and a union result of all sub-tensor data represented by the states is the tensor data;
a target splitting path module configured to determine a target splitting path of the target layer according to the weight of the state path; and
a splitting module configured to split the operator of the target layer in the neural network model by using the target splitting path.

The present disclosure provides a neural network model splitting method to realize the above-mentioned purpose. The method includes:

according to an operator of a target layer in a neural network model, determining a splitting state set of tensor data associated with the operator of the target layer, where the target layer is at least one layer in the neural network model;
inserting a glue operator between the operator of the target layer and the associated splitting state set to adjust a state in the splitting state set of the tensor data of the operator, where the glue operator is used for adjusting a state of the tensor data that is obtained by using a splitting manner to another state that is obtained by using another splitting manner;
traversing the splitting state set according to a directed acyclic graph of the neural network model, and determining a state path between adjacent splitting state sets and a weight of the state path, where the state path represents a splitting method of the operator, each state in the splitting state set represents a set of sub-tensor data, and a union result of all sub-tensor data represented by the states is the tensor data;
determining a target splitting path of the target layer according to the weight of the state path; and
splitting the operator of the target layer in the neural network model by using the target splitting path.

The present disclosure provides a neural network model splitting apparatus to realize the above-mentioned purpose. The apparatus includes:

a splitting state set determining module configured to, according to an operator of a target layer in a neural network model, determine a splitting state set of tensor data associated with the operator of the target layer, where the target layer is at least one layer in the neural network model;
a glue operator insertion module configured to insert a glue operator between the operator of the target layer and the associated splitting state set to adjust a state in the splitting state set of the tensor data of the operator, where the glue operator is used for adjusting a state of the tensor data that is obtained by using a splitting manner to another state that is obtained by using another splitting manner;
a state path determining module configured to traverse the splitting state set according to a directed acyclic graph of the neural network model, and determine a state path between adjacent splitting state sets and a weight of the state path, where the state path represents a splitting method of the operator, each state in the splitting state set represents a set of sub-tensor data, and a union result of all sub-tensor data represented by the states is the tensor data;
a target splitting path determining module configured to determine a target splitting path of the target layer according to the weight of the state path; and
a splitting module configured to split the operator of the target layer in the neural network model by using the target splitting path.

The present disclosure further provides a neural network model splitting method to realize the above-mentioned purpose. The method includes:

according to an operator of a target layer in a neural network model, determining a splitting state set of tensor data associated with the operator of the target layer, where the target layer is at least one layer in the neural network model;
inserting a compensation operator between the operator of the target layer and the associated splitting state set to adjust a state in the splitting state set of the input tensor data of the operator, where the compensation operator is used for obtaining target data from adjacent sub-tensor data of any tensor data of the state, and merging the target data with the sub-tensor data;
traversing the splitting state set according to a directed acyclic graph of the neural network model, and determining a state path between adjacent splitting state sets and a weight of the state path, where the state path represents a splitting method of the operator, each state in the splitting state set represents a set of sub-tensor data, and a union result of all sub-tensor data represented by the states is the tensor data;
determining a target splitting path of the target layer according to the weight of the state path; and
splitting the operator of the target layer in the neural network model by using the target splitting path.

The present disclosure provides a neural network model splitting apparatus to realize the above-mentioned purpose. The apparatus includes:

a splitting state set module configured to, according to an operator of a target layer in a neural network model, determine a splitting state set of tensor data associated with the operator of the target layer, where the target layer is at least one layer in the neural network model;
a compensation operator insertion module configured to insert a compensation operator between the operator of the target layer and the associated splitting state set to adjust a state in the splitting state set of the input tensor data of the operator, where the compensation operator is used for obtaining target data from adjacent sub-tensor data of any tensor data of the state, and merging the target data with the sub-tensor data;

a state path module configured to traverse the splitting state set according to a directed acyclic graph of the neural network model, and determine a state path between adjacent splitting state sets and a weight of the state path, where the state path represents a splitting method of the operator, each state in the splitting state set represents a set of sub-tensor data, and a union result of all sub-tensor data represented by the states is the tensor data;

a target splitting path module configured to determine a target splitting path of the target layer according to the weight of the state path; and

a splitting module configured to split the operator of the target layer in the neural network model by using the target splitting path.

The present disclosure further provides a neural network model splitting method to realize the above-mentioned purpose. The method includes:

according to an operator of a target layer in a neural network model, determining a splitting state set of tensor data associated with the operator of the target layer, where the target layer is at least one layer in the neural network model;

inserting a glue operator between the operator of the target layer and the associated splitting state set to adjust a state in the splitting state set of the tensor data of the operator, where the glue operator is used for adjusting a state of the tensor data that is obtained by using a splitting manner to another state that is obtained by using another splitting manner;

inserting a complementary operator between the operator of the target layer and the associated splitting state set to adjust a state in the splitting state set of the input tensor data of the operator, where the complementary operator is used for obtaining target data from adjacent sub-tensor data of any tensor data of the state, and merging the target data with the sub-tensor data;

traversing the splitting state set according to a directed acyclic graph of the neural network model, and determining a state path between adjacent splitting state sets and a weight of the state path, where the state path represents a splitting method of the operator, each state in the splitting state set represents a set of sub-tensor data, and a union result of all sub-tensor data represented by the states is the tensor data;

determining a target splitting path of the target layer according to the weight of the state path; and

splitting the operator of the target layer in the neural network model by using the target splitting path.

The present disclosure provides a neural network model splitting apparatus to realize the above-mentioned purpose. The apparatus includes:

a splitting state set module configured to, according to an operator of a target layer in a neural network model, determine a splitting state set of tensor data associated with the operator of the target layer, where the target layer is at least one layer in the neural network model;

a glue operator insertion module configured to insert a glue operator between the operator of the target layer and the associated splitting state set to adjust a state in the splitting state set of the tensor data of the operator, where the glue operator is used for adjusting a state of the tensor data that is obtained by using a splitting manner to another state that is obtained by using another splitting manner;

a compensation operator insertion module configured to insert a compensation operator between the operator of the target layer and the associated splitting state set to adjust a state in the splitting state set of the input tensor data of the operator, where the compensation operator is used for obtaining target data from adjacent sub-tensor data of any tensor data of the state, and merging the target data with the sub-tensor data;

a state path module configured to traverse the splitting state set according to a directed acyclic graph of the neural network model, and determine a state path between adjacent splitting state sets and a weight of the state path, where the state path represents a splitting method of the operator, each state in the splitting state set represents a set of sub-tensor data, and a union result of all sub-tensor data represented by the states is the tensor data;

a target splitting path module configured to determine a target splitting path of the target layer according to the weight of the state path; and

a splitting module configured to split the operator of the target layer in the neural network model by using the target splitting path.

The technical solution provided by the present disclosure can facilitate the expansion of deep learning accelerators from a single-core architecture to a multi-core architecture in the cost of relatively small overhead, and offers a highly-efficient splitting method for a given network and an underlying accelerator, which may efficiently decrease the end-to-end latency of different networks on a multi-core accelerator.

## BRIEF DESCRIPTION OF THE DRAWINGS

FIG. 1 is a schematic diagram of a shared memory multi-core architecture;
FIG. 2 is a flowchart of a neural network model splitting method according to an embodiment of the present disclosure;
FIG. 3 is a splitting diagram of a serial neural network method;
FIG. 4 is a flowchart of a neural network model splitting method according to an embodiment of the present disclosure;
FIG. 5 is a splitting diagram in a case where a glue operator is inserted between an operator and input tensor data;
FIG. 6 is a complementary schematic diagram;
FIG. 7 is a flowchart of a neural network model splitting method according to an embodiment of the present disclosure;
FIG. 8 is a schematic diagram of pyramid splitting;
FIG. 9 is a flowchart of a neural network model splitting method according to an embodiment of the present disclosure;
FIG. 10 is a schematic diagram of hardware equipment for neural network model splitting according to an embodiment of the present disclosure.

## DETAILED DESCRIPTION

In order to provide a thorough explanation of the embodiments as well as various characteristics and technical details of the embodiments, the technical schemes of the present disclosure are clearly and completely described below in reference to the drawings. It should be noted that the characteristics shown in the drawings are not necessarily drawn to scale. Known materials, components, and process technologies are not described in the present disclosure so as not to obscure the exemplary embodiments of the present disclosure. The examples given are only intended to facilitate the understanding of the implementation of the exemplary embodiments of the present disclosure, and to further enable those skilled in the art to implement the exemplary embodiments. Therefore, these examples should not be construed as limiting the scope of the embodiments of the present disclosure.

Unless specifically defined otherwise, the technical or scientific terms used in the present disclosure shall have the usual meanings understood by those with ordinary skills in the field to which this disclosure belongs. The "first", "second" and similar words used in the present disclosure do not indicate any order, quantity, or importance, but are only used to distinguish different components. In addition, in the various embodiments of the present disclosure, the same or similar reference numerals indicate the same or similar components.

Below is a detailed description of a neural network model splitting method and related products in reference to the drawings provided by the present disclosure.

In recent years, thanks to the great achievements of deep learning in many fields, deep learning accelerators have become a rapidly developing field. These newly emerged accelerators often have greater advantages over GPU in terms of performance per watt. Similar to the development of general-purpose processors, deep learning accelerators can also be expanded from a single-core architecture to a multi-core architecture. This expansion is very suitable for data parallel training in deep learning. Data parallel refers to speeding up training by dividing a training data set into several parts, and using a plurality of processing cores to process some sub-data sets separately. When this method is adopted in a multi-core architecture, each core processes different data sets of the training data in parallel, thereby improving the throughput of the entire system and speeding up training. Therefore, the multi-core accelerator architecture can easily improve the computing throughput of the entire system during the training phase while maintaining a good performance per watt of each core.

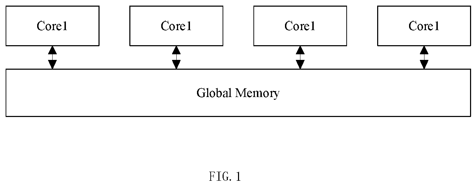

For a chip with the multi-core processor architecture, as shown in FIG. 1, this shared memory multi-core architecture is a classic multi-core architecture, which is very suitable for data parallel neural network training methods. Each core can serve as a processor in data parallel to read different data respectively, and then complete the forward and backward computations of a neural network model in parallel. Each core can still maintain its good performance per watt under the previous single-core architecture in the computation phase, and at the same time, the throughput of the entire system can also be improved with the expansion of the count of cores. A problem with data parallel is that its expandability depends on the size of data batch to be processed. Although this is usually not a problem in the training phase, the premise is difficult to be guaranteed in the inference phase. Generally speaking, a neural network model used in the real-time service field (including automated driving and the like), data to be processed is usually input serially as a stream, resulting in a situation where data to be processed each time is very small or even may be a single picture. In this case, data parallel cannot provide any parallelism and all work tasks will be on a single core, which leads to a result that the computing resources of a plurality cores cannot contributes to the speed of task processing.

After the training of the neural network model is completed by using the data set offline, the model will be deployed in a cloud server to process data sent from the external. At this time, the application scenario changes from offline training to online inference. In the online inference phase, latency is a very important indicator. Latency refers to the time from the server receiving the data to be processed to the return of the processed result, which in other words, is the data processing time of the neural network model. Low latency ensures that the cloud server can respond to the data sent by the client in the shortest time. In some sensitive scenarios, latency directly determines whether the solution is feasible. Therefore, in the online inference phase, the requirements for accelerators have changed from processing large batches of data with high throughput to processing small batches of data with low latency.

In this case, traditional data parallel or model parallel may fail to effectively reduce the latency of inference tasks. Large batches of data are a premise of data parallel, which contradicts the characteristics of small batches of data of online inference. Model parallel is usually a method used to solve a problem that a large-scale neural network model exceeds the memory limit of a single equipment. Assigning operators to different cores does not reduce the network latency. In order to effectively reduce the latency of inference tasks on multi-core accelerators, it is necessary to find a method to reasonably allocate the inference computation tasks for small batches of data or even a single piece of data to the cores of the multi-core architecture accelerators, and ensure that there are as many cores as possible that are involved in the computations at every moment. In this way, the resources of the multi-core architecture can be fully utilized. A method is to split a computation task of each operator in the neural network and then allocate the split computation task to a plurality of cores for computations, which can ensure that there are a plurality of cores participating in computations at every moment even when the computation task is an inference task of processing a single picture, thereby achieving the purpose of using multi-core resources to reduce latency.

However, for multi-core accelerators, there are still many problems to be solved. First of all, deep learning accelerators adapt to the data parallel characteristics of deep learning algorithms with their customized hardware designs, which improves computational throughput. Accelerators often require a data scale that is large enough to achieve higher computational efficiency, and the further splitting of operators may reduce the computational scale of each core. When splitting reaches a certain granularity, the loss of computational efficiency of each core will exceed the benefits of parallelism that is increased by splitting. Therefore, regarding the splitting for parallelism and computational efficiency, sufficient parallelism must be provided while ensuring sufficient computational efficiency.

On the other hand, the neural network model can be regarded as a complex computation graph that is composed of hundreds or even thousands of operators. The algorithm logic in different types of operators may differ, which requires different splitting methods for these operators. In addition to the balance between computational efficiency and parallelism, factors that should be considered for operator splitting also includes the operators before and after the operator to be split, and even the overall impact of the splitting. Since the rapid development of deep learning has brought more and more large-scale and complex networks, it is unrealistic to find a good parallel method manually. In this case, an automated method is required for providing a good strategy of splitting for parallelism for different networks.

In addition, the portability of the underlying accelerator should also be considered. For accelerators that do not have good programmability, there may be a heavy workload brought by the expansion from a sing-core architecture to a multi-core architecture as well as the modification of the software stack for realizing the splitting for parallelism within an operator. The implementation of traditional data parallel and model parallel is still based on a processing core to complete the computation task of an operator, which will not bring too much extra work. However, the cross-core parallel of a single operator requires modification of the implementation of the operator. The difficulty of such modification depends on the programmability of the accelerator and the complexity of the implementation logic of the original operator. How to decrease the extra overhead in the process of implementing low-latency inference on the multi-core architecture, and reduce the dependency of the workload on the programmability of the accelerator during the implementation process, so that the method can be versatile for different multi-core accelerators is still a question to be solved in the future.

Based on the above analysis and description, an end-to-end splitting scheme is automatically provided for a large-scale neural network model. This scheme splits an operator into a plurality of smaller-scale sub-operators, so that a compute library under the single-core architecture can be called directly, which helps to avoid the extra work caused by re-implementation. For example: an activation operator can be split to obtain many smaller activation operators, which means that instead of modifying or re-implementing an activation function of a multi-core version, only the original single-core activation function needs to be called on the plurality of cores to complete each sub-task. In this process, not only should the computational efficiency and parallelism of each operator after splitting be take into account, but also the coordination between the operators in the context during the splitting should be considered. The ultimate goal is to obtain a scheme of splitting for parallelism that can effectively reduce the end-to-end inference latency of the entire neural network model.

Taking an application of automated driving as an example, a car needs to analyze and process external information such as images, videos, and voices transferred from the car sensor during the automated driving process. In order to ensure safety, the car must obtain the processing result in the shortest time to make decisions. By adopting this scheme, a car that uses a chip with the multi-core processor architecture can allocate the computational workload of processing small batches of external information by the neural network model to a plurality of processor cores in a balanced manner, complete the information processing within the specified response time, and return a processing result to assist automated driving. The technical scheme provided by the present disclosure can facilitate the expansion of deep learning accelerators from a single-core architecture to a multi-core architecture in the cost of relatively small overhead, which may efficiently decrease the end-to-end latency of different networks on a multi-core accelerator.

In the application scenario above, the chip with the multi-core processor architecture is set in the vehicle. In practice, the chip with the multi-core processor architecture can also be set in the cloud server. A car can transfer images, videos, voices and other external information obtained by the car sensor to the cloud server through 3G/4G, WIFI, and other networks. The cloud server can use this scheme to allocate the computational workload of processing small batches of external information by the neural network model to a plurality of processor cores in a balanced manner. Within the specified response time of the car, the cloud server feeds back the processing result to the car through 3G/4G, WIFI, and other networks. In practice, the scale of external information collected by the car sensor may be different. Before application, the car processor uses this scheme to determine the corresponding operator splitting path according to the scale of external information. The operator splitting schemes corresponding to different scales of external information are stored in the corresponding areas. The chip with the multi-core processor architecture calls the corresponding operator splitting path after obtaining external information, splits the operator in the neural network model, and allocates the computational workload of the external information to a plurality of processor cores in a balanced manner.

Usually, the upper framework needs to call the compute library to obtain the instruction implementation of each neural network model operator on the processor. Specifically, the framework informs the compute library of the type and parameters of each operator, and the compute library returns the machine instruction required for executing the operator on the processor. The framework loads data and the machine instruction onto the processor through a driver, starts the processor to complete the computation of the operator.

If the computing platform of the operator is to be changed from a single-core accelerator to a multi-core accelerator with similar or even the same core structure, the compute library needs to be re-designed so that the compute library can generate machine instructions that can run on a plurality of cores. Specifically, since the plurality of cores need to read different parts of the same input tensor data, and also need to write their output back to different parts of the same output tensor data, the compute library needs to modify all the computation instructions for reading and storing of each operator.

The neural network splitting method provided by the embodiment of the present disclosure can help to avoid modifying the compute library of the single-core processor, and to realize the parallel execution of the neural network model on the multi-core processor. Specifically, the upper framework divides the operator in the neural network model into several sub-operators that can be executed in parallel. For each sub-operator, the framework calls the compute library to generate a machine instruction for executing the sub-operator on a single core. By loading the machine instruction of each sub-operator on different cores, the parallel computation of the operator on the multi-core processor is realized. Specifically, since the framework uses the compute library of a single-core processor to generate computation instructions for sub-operators, the input and output tensor data of the operator in the neural network model are also split into corresponding sub-tensor data as the operator is split into sub-operators.

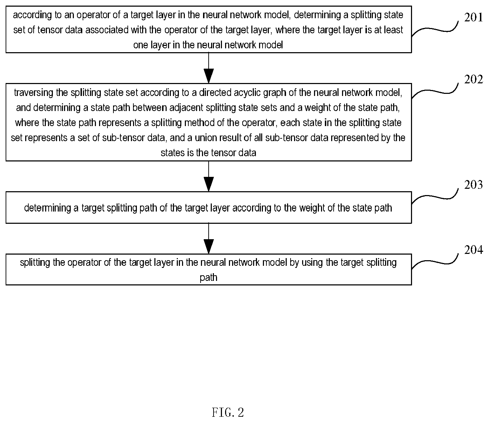

Based on the description above, FIG. 2 shows a flowchart of a neural network model splitting method according to an embodiment of the present disclosure. The method includes:

a step 201: according to an operator of a target layer in the neural network model, determining a splitting state set of tensor data associated with the operator of the target layer.

In this embodiment, the neural network model is usually regarded as a directed acyclic graph consisting of operators and multi-dimension tensor data. The operators and tensor data are interconnected by directed edges. The directed edges indicate whether data is input to or output by an operator. *op* denotes an operator, and *tensor* denotes tensor data. At the same time, in order to unify the expression of the splitting method of different operators, the framework uses the splitting method of tensor data that is associated with the operator to explain the splitting method of different operators. It is assumed that all tensor data in the network are 4-dimensional data. For the input data or output data of a last fully connected layer and a normalized exponential regression layer of an image classification network, though the actual dimension of the input data or output data is less than 4, it is still expressed as a 4-dimensional tensor. N, C, H, W denote the four dimensions respectively. N denotes the batch size, C denotes a count of feature images, H denotes the height of a feature image, and W denotes the width of a feature image. This assumption is only for the convenience of explanation. The framework itself can support the processing of a neural network model that contains tensor data of any count of dimensions. Nevertheless, 4 dimensions are sufficient for a considerable types of neural network structure.

When the technical scheme is used for splitting the operator in a neural network model, the computational logic supported by the operator as well as the splitting strategy differ as the type of the operator differs. In order to uniformly express splitting the strategies of different operators, this technical scheme uses the splitting state of the input tensor data and output tensor data of an operator to express the splitting of the computational logic of the operator.

This technical scheme can split all operators in the entire neural network model, or split some operators in the neural network model. Moreover, currently new network structures and algorithms in the deep learning field have gradually blurred the physical meaning of data dimensions and also the boundary between data dimensions. This technical scheme can be extended to be applied to operator splitting in more dimensions.

A kind of tensor data splitting is called a state s of the tensor data. After splitting the tensor data, a sub-tensor data set can be obtained. The state s is represented by the corresponding sub-tensor data set. All possible splitting states $\{s_0, s_1, s_2, ...\}$ form the splitting state set $S$ of the tensor data. Generally speaking, $S$ is a very large state space, which means that the space of the possible splitting methods of the operator represented by the splitting state of the tensor data can also be very huge.

According to some reasonable assumptions, the state set of the tensor data can be pruned. First of all, the latency of completing the computation of an operator by a multi-core accelerator depends on a core that takes a longest time to execute a sub-task. Whereas in the multi-core architecture, different cores are equal to each other in terms of the hardware structure, therefore, the time spent by each core depends on the task load assigned to the core. Therefore, a reasonable assumption is to ensure that the scale of the sub-operators after splitting is generally balanced. For this reason, the unbalanced splitting state can be omitted from the state set $S$ of the tensor data. In addition, the count of cores in the multi-core architecture is usually an integer power of 2, such as 1, 2, 4, 8, 16, and so on. A task, of which parallelism is not an integer power of 2, may often cause "fragments" in the scheduling of the cores. Therefore, the count of sub-operators after splitting should be an integer power of 2. Based on these two assumptions, the search space of the operator splitting strategy may be greatly reduced.

It should be noted that any splitting state of tensor data associated with an operator can be chosen to represent an effective splitting method of the operator. A dimension where the tensor data splitting is performed should be supported by the operator. For example, input data of a normalized exponential regression operator (Softmax) should not be split in a dimension to be normalized. In addition, the splitting of an input tensor and an output tensor of the operator should satisfy the computational logic of the operator. For example, the start and end points of each sub-block obtained by splitting in the H/W dimension of output data of a convolution operator should be computed according to a sub-block of corresponding input data that is obtained by splitting in the H/W dimension based on a convolution kernel and an offset stride of the convolution operator; input data of the convolution operator should be split in the C dimension in a way that is exactly the same as how weight data is split in the C dimension, and output data of the convolution operator should be split in the C dimension in a way that is exactly the same as how the weight data is split in the N dimension. In the architecture, an output state can be used to infer an input state of the operator according to the specific logic of the operator, or an input state can be used to infer an output state of the operator according to the specific logic of each operator, which ensures that the state of related data can always represent an effective operator splitting method.

The method includes a step 202: traversing the splitting state set according to a directed acyclic graph of the neural network model, and determining a state path between adjacent splitting state sets and a weight of the state path.

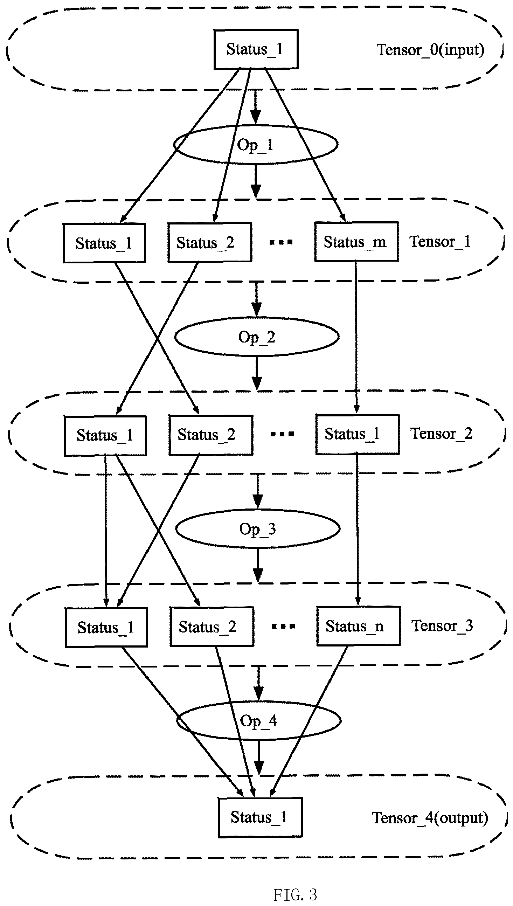

As shown in FIG. 3, the splitting method $P$ of the entire neural network model can be regarded as a jump from a splitting state in the splitting state set of input tensor data of each operator to a splitting state in an output tensor. The splitting state of the output tensor of a previous operator is the splitting state of the input tensor of a next operator. Each possible jump through an operator corresponds to an effective splitting method of the operator. Therefore, the state path represents the splitting method of an operator.

In this technical scheme, tensor data is decomposed according to a decomposition method to obtain a sub-tensor set. The sub-tensor set corresponds to a splitting state. Multiple splitting states can be obtained by using different decomposition methods. The splitting states obtained by using all decomposition methods form a splitting state set. It can be seen that each splitting state corresponds to a sub-tensor set which includes all the elements in the tensor data. Moreover, in a sub-tensor set, the elements of each sub-tensor may or may not overlap.

As described above, the state path represents the splitting method of the operator, and the computational logic of the operator is split according to the splitting method corresponding to the state path to obtain the corresponding sub-operator set. The state of input tensor data and the state of corresponding output tensor data are connected by a state path, and a sub-tensor data set representing a splitting state of the input tensor data is processed by a sub-operator in a sub-operator set to obtain a sub-tensor data set of a corresponding splitting state of the output tensor data.

In this technical scheme, the weight of a state path represents the time that a multi-core accelerator takes to parallelly execute an operator in a certain splitting state. The time that a multi-core accelerator takes to complete the computation of an operator depends on a core that takes a longest time to execute a sub-task. Parameters are used for estimation when the weight of the state path is computed:

1) computational workload $c_1, c_2, ..., c_n$ of n sub-operators after splitting. $c_i$ is computed according to the type and scale of the i-th sub-operator after splitting.

2) the amount of data accessed $d_1, d_2, ..., d_n$ of the n sub-operators. $d_1$ is computed according to the type and scale of the i-th sub-operator after splitting.

3) computational throughput rate $\alpha$ of each accelerator core. $\alpha$ is determined by the performance parameters of the accelerator.

4) memory access bandwidth $\beta$ of each core. Generally speaking, a plurality of cores share limited memory access bandwidth, therefore $\beta = B / n$. $B$ is the total bandwidth of the multi-core accelerator.

The computation formula of the weight of the state path is:

$$t = \max_{i=1,\ldots,n}(\max(c_i/\alpha,\ d_i/\beta)) \qquad \text{formula 1)}$$

The operation of finding the maximum value of the inner side is based on the fact that the computation part and the memory access part realized by the operator can hide from each other. In other words, the computation part and the memory access part can be executed concurrently as much as possible. For some accelerators, when the size of the sub-operator is too small, the computational throughput of each core will decrease. In this case further corrections can be made to $\alpha$ make the estimated value more accurate. The operation of finding the maximum value of the outer side, which is the time for the multi-core accelerator to complete the computation of the operator, depends on a core that takes a longest time to execute a sub-task.

It should be noted that the above method of obtaining the weight of the state path is only a partial list, rather than an exhaustive list of embodiments. Those skilled in the art may make variations or changes to the technical scheme provided by the present disclosure based on the understanding of the essence of the technical scheme of the present disclosure. For example: the weight for measuring the state path can be not only the time taken to execute the sub-task, but also the throughput of the execution of the sub-task. Alternatively, the weight of the state path can also be determined by measuring the time for executing all sub-tasks in the operator splitting mode corresponding to the state path by the multi-core processor. However, as long as the functions and technical effects realized by a method are similar to those of this disclosure, the method should all fall within the protection scope of this disclosure.

The method includes a step 203: determining a target splitting path of the target layer according to the weight of the state path.

In the step 203, there are two methods to determine the splitting path of the target layer by using the weight of the state path. A first method is to determine the splitting path by forward traversal, which includes the following steps:

traversing all splitting state sets of the target layer, for a current splitting state set, traversing each state to obtain all state paths pointing to the current state and a splitting path from a starting state of the state paths pointing to the current state to a starting state of input tensor data of the target layer;
determining a splitting path from the current state to the starting state of the input tensor data of the target layer according to the state paths and the splitting path;
determining a splitting path from the current state to the starting state of the input tensor data of the target layer according to weights of the state paths and a weight of the splitting path, where the weight of the splitting path is determined according to the weights of all the state paths corresponding to the splitting path; and
after traversing all the splitting state sets of the target layer, obtaining a target splitting path between the splitting state set of the input tensor data of the target layer and the splitting state set of output tensor data of the target layer.

A second method is to determine the splitting path by back traversal, which includes the following steps:

traversing all splitting state sets of the target layer, for a current splitting state set, traversing each state to obtain all state paths starting from the current state and a splitting path from an end state of the state paths starting from the current state to an end state of output tensor data of the target layer;
determining a splitting path from the current state to the starting state of the input tensor data of the target layer according to weights of the state paths and a weight of the splitting path, where the weight of the splitting path is determined according to the weight of all the state paths corresponding to the splitting path; and
after traversing all the splitting state sets of the target layer, obtaining a target splitting path between the splitting state set of the input tensor data of the target layer and the splitting state set of output tensor data of the target layer.

Below is an example of how to obtain a target splitting path between the splitting state set of input tensor data of the target layer and the splitting state set of the output tensor data of the target layer after traversing all the splitting state sets of the target layer.

The neural network model shown in FIG. 3 is serial, the input tensor data and the output tensor data of the entire neural network model are both in unsplit state. When the operator of the entire neural network model shown in FIG. 3 is to be split, a serial neural network model containing n operators are described as an operator sequence ($op_1$, $op_2$,..., $op_n$), if it is assumed that each operator only has one input and one output and the input of a previous operator serves as the output of a next operator, then all tensor data including the input tensor data and output tensor data of the entire neural network model and intermediate result tensors among all the operators form a set ($tensor_0, tensor_1, ..., tensor_n$), where the input of $op_i$ is $tensor_{i-1}$ and output $op_i$ is $tensor_i$. Each data tensor $tensor_i$ has a corresponding state set $S^i$. A goal of the searching strategy is to find a mapping relationship $tensor_i \rightarrow s^i$ between a tensor and a state in the state set of the tensor. By determining a specific splitting state for each tensor in the neural network model, a splitting method of all operators can then be determined. Therefore, the mapping relationship between all tensors in a neural network model and the splitting state of those tensors is called a splitting method $P$ of the network model. In the computation stage, the i-th operator $op_i$ uses input data that is in the splitting state $s$ to compute output tensor data that is in the splitting state $r$. The specific parallel computation method is determined according to the state of the input tensor data and the output tensor data. At the same time, the computation time of this operator is marked as $t_{s \rightarrow r}$, the value of the operator depends on the corresponding splitting method and the hardware characteristics of the underlying accelerator, then the computation formula for the delay $T$ of the entire network is:

$$T = \sum_{i=1}^{n} t_{s^{i-1} \rightarrow s^i} \quad , \text{ where } \quad s^{i-1} \in S^{i-1}, \quad s^i \in S^i, \quad (2)$$

Similarly, there is also time $t_i$ used for executing the operator in parallel on the multi-core accelerator using the splitting method, in this case, $t_i$ can be regarded as the weight of the directed edge of the state of the input tensor data of the operator pointing to the state of the output tensor data. At the same time, regarding the input tensor data and output tensor data of the entire neural network model, their corresponding splitting state spaces have only one state that is unsplit and keeps the entire data block continuous and complete, so that the splitting method $P$ of the neural network model can start with complete input data and end with complete output data. In this way, external users can always see complete input and output. At this point, searching for a good splitting scheme $P$ for a given neural network model is to find the shortest path from the unsplit state of the input tensor data to the unsplit state of the output tensor data. The path needs to select a state from the effective state space of every intermediate result tensor to pass through. Formula 3 and formula 4 give formula expressions of such abstraction.

$$P = \{s^0, s^1, ..., s^n\} = \arg\min_{s^i \in S^i}(T(s^0, s^1, ..., s^n)) \quad (3)$$

$$T(s^0, s^1, ..., s^n) = \sum_{i=1}^{n} t_{s^{i-1} \rightarrow s^i} \quad (4)$$

It is also noted that in FIG. 3, there is a situation where one splitting state of the input tensor data points to a plurality of splitting states of the output tensor data. This situation is the cause of huge splitting space of the neural network model.

In this technical solution, it is assumed that the unsplit state of the input tensor data of the entire neural network model is a starting state $s_{root}$. In the initial stage, the unsplit state of the input tensor data of the neural network model is the starting state $s_{root}$, the weight of the corresponding splitting path is 0, and the weight of the corresponding splitting path of all states of all remaining tensor data is $\infty$. A state $s$ of a piece of tensor data in the neural network model has a corresponding splitting path that is from $s_{root}$ to $s$, and the weight of the splitting path is $l_s$. Each splitting state set is visited from front to back, and in each splitting state set, each state $s$ is traversed sequentially. Each state $s$ points to each directed edge $e_i, ..., e_{ks}$ of several splitting states in a next splitting state set. Taking the splitting state v in the next splitting state set as an example, the formula (1) is used to obtain the weight tsv between the state s and the state $v$, and the formula (5) below is used to update the weight $l_v$ of the splitting path starting from $s_{root}$ to the state v, where the splitting path corresponds to the state $v$ in the next splitting state set pointed by the state path.

$$l_v = \min(l_v, l_s + t_{sv}) \quad (5)$$

After traversing forward the access of all splitting state sets according to the topological relationship of the neural network model, a target splitting path from the unsplit state $s_{root}$ of input tensor data of the entire neural network model to the unsplit state $s_{end}$ of output tensor data of the neural network model can be obtained.

The above description describes a path going through a state of every splitting state set from the unsplit state $s_{root}$ to the unsplit state $s_{end}$, which is the splitting path of the neural network model. A splitting path with the smallest weight is selected from the splitting paths of the neural network model as the target splitting path of the neural network model.

It should be noted that the neural network model shown in FIG. 3 is a serial neural network model, and in order to facilitate the description of this technical scheme, the corresponding splitting state set of the input tensor data and output tensor data of the neural network model is the unsplit state. When the splitting state set of the output tensor data of the neural network model is not the unsplit state $s_{end}$, but a set of a plurality of splitting states, the smallest weight is selected from the weights of the splitting path of each splitting state in the splitting state set of the output tensor data of the neural network model as the target splitting path between the splitting state set of the input tensor data of the entire neural network model and the splitting state set of the output tensor data of the neural network model.

It is noted that the entire scheme can also be changed to searching for a splitting path from the unsplit state $s_{end}$ to the unsplit state $s_{root}$, and the two are equivalent. Similarly, when the splitting state set of the input tensor data of the neural network model is not the unsplit state $s_{end}$, but a set of a plurality of splitting states, the smallest weight is selected from the weights of the splitting path of each splitting state in the splitting state set of the input tensor data of the neural network model as the target splitting path between the splitting state set of the input tensor data of the entire neural network model and the splitting state set of the output tensor data of the neural network model.

The neural network model shown in FIG. 3 is a serial neural network model, and the state in the splitting state set of the input tensor data and the output tensor data of the model is the unsplit state. In practical applications, the technical schemes shown in FIGs. 2, 4, 7 and 9 all need to solve the problem of consistency of the splitting method of different branches in a multi-branch neural network model. The operator at the junction of branches has more than one input tensor data, such as a bitwise addition operator (Add), a bitwise multiplication operator (Mult), and a concatenation operator (Concat). For an operator A that has 2 input, when accessing the operator, that is, after finishing enumerating the splitting state set of the input tensor data according to the splitting state set of the input tensor data, the two input tensor data $tensor_{left}$ and $tensor_{right}$ have corresponding splitting state sets $S_{left}$ and $S_{right}$. When continuing to traverse forward along the two branches starting from $tensor_{left}$ and $tensor_{right}$, in one case, the two branches will extend until the end of the traversal, indicating that the entire network has more than one input data, which is not common in an inference task. In another case, the two branches merge together at a certain operator. In either case, when determining the splitting scheme P, splitting states that do not match each other may be selected for the two input tensor data $tensor_{left}$ and $tensor_{right}$ of the operator A. Specifically, if it is assumed that the operator A is a binary bitwise addition operator, the state selected by the backtracking process in the splitting state set of the $tensor_{left}$ may be a state that is only split in the C dimension, while the state selected in the splitting state set of $tensor_{right}$ may be a state that is only split in the H dimension. The splitting methods of the addition operator represented by the two splitting states are inconsistent, which may cause the entire splitting plan P to be invalid. In order to solve this problem, before finishing traversing the operator A, it needs to be ensured that the splitting state set of $tensor_{left}$ and $tensor_{right}$ contains only one splitting state, which further ensures the certainty of the state selected in the two state sets during the backtracking process. Therefore, in the forward traversal phase, when the output tensor data of the operator is used as input tensor data by at least two operators, or the operator has at least two output tensor data, one splitting state in the splitting state set of the output tensor data of the operator is retained, where the splitting state is determined according to the same state path of the operator. In the back traversal phase, when the operator has at least two input tensor data, one splitting state in the splitting state set of the input tensor data of the operator is retained, where the splitting state is determined according to the same state path of the operator. In this way, before finishing traversing a branch operator, the state with the smallest accumulative weight will be selected from the splitting state sets of a plurality of input data and retained, and the other splitting states in the splitting state sets will be removed.

It should be noted that the above method of obtaining the target splitting path is similar to the Viterbi algorithm. The embodiments only list some rather than all examples. Those skilled in the art may make modifications and changes based on the understanding of the essence of the technical solution of this disclosure. An example of such modifications and changes may be: the weight of each splitting path from the splitting state set of the input tensor data of the neural network model to the splitting state set of the output tensor data of the neural network model is determined according to the sum of the weights of corresponding state paths. A threshold can be set based on experience. When the weight of a splitting path is less than a preset threshold, the splitting path can serve as a target splitting path for splitting the neural network model. However, as long as the functions and technical effects realized by a method are similar to those of this disclosure, the method should all fall within the protection scope of this disclosure.

The method includes a step 204: splitting the operator of the target layer in the neural network model by using the target splitting path.

From the above description, the hardware resources of the multi-core processor structure chip may be fully utilized by splitting the computational logic of an operator in a neural network into smaller sub-tasks and assigning the sub-tasks to the plurality of cores for parallel execution.

For the technical solution shown in FIG. 2, under the most ideal condition, sub-operators obtained by splitting are expected to write their output tensor data to corresponding locations in the storage space that stores complete output tensor data. In this way, after all the sub-operators of the operator are executed, the result is always a complete and continuous data block. But for some accelerators, this is not easy to realize. First of all, because the storage location of the output tensor data of an operator after splitting may be discontinuous in the entire output, it is necessary to rewrite the code of the output part of the operator so that the operator can write the output result back to a corresponding discrete location of a sub-tensor in the memory. At the same time, accelerators usually further adjust the order of data in the memory to improve the efficiency of memory access during computation, which makes it more difficult and cumbersome to modify the output logic of the operator. At the same time, if the computational logic or splitting logic of the subsequent operator does not require the input data to ensure storage continuity in a certain dimension, the data that is output from the previous layer and that is in a discrete storage state in this dimension can be directly used in the computation of the next layer without the need to ensure the continuity of the output data.

Therefore, the framework separates the task of adjusting the splitting form of tensor data from the computation tasks of the operator, and abstracts the task into a new operator which is called a glue operator. This separation avoids the modification on the output logical of each operator and enhances the portability of the framework to different underlying accelerators. The glue operator is used to adjust the sub-data blocks obtained by splitting a tensor in a certain way into sub-data blocks obtained by splitting the tensor in another way. As shown in Table 1, the splitting methods allowed by different types of operators are different when expressed by the input tensor data and output tensor data. When the splitting method of the output tensor data of the operator of the previous layer is not allowed by the operator of the next layer, it is necessary to use the glue operator to adjust the splitting method of the tensor data, so as to "glue" the two operators. In addition, even if the splitting method of the output of the previous layer is supported by the next layer, the splitting of tensor data can also be adjusted to a form that is more conducive to the computation of the next layer by using the glue operator.

Table 1

| Operation | input dimension that can be split |
|---|---|
| Convolution | N, C, H, W (H and W should not be smaller than kernel) |
| FC | N, C |
| Relu | N, C, H, W |
| Scale | N, C, H, W |
| BatchNorm | N, C, H, W |
| S oftmax | dimension to be normalized cannot be split |
| Pooling | N, C, H, W (H and W should not be smaller than kernel) |

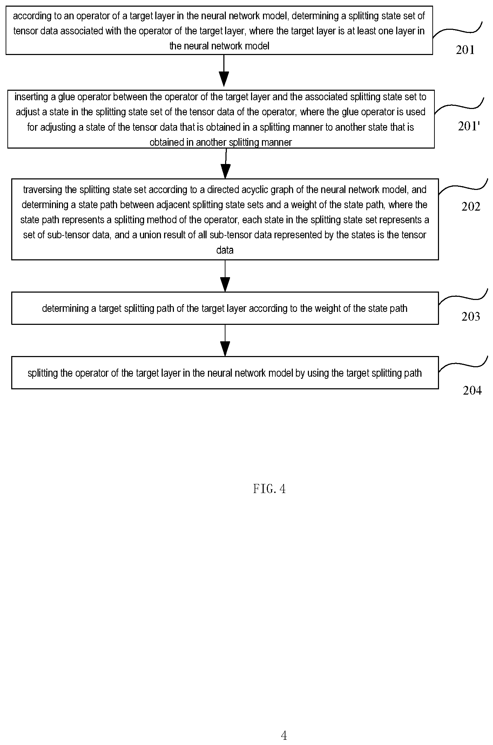

Based on the description above, on the basis of FIG. 2, the present disclosure provides another neural network model splitting method. As shown in FIG.4, on the basis of FIG. 2, the method further includes:

a step 201': inserting a glue operator between the operator of the target layer and the associated splitting state set to adjust a state in the splitting state set of the tensor data of the operator, where the glue operator is used for adjusting a state of the tensor data that is obtained in a splitting manner to another state that is obtained in another splitting manner.

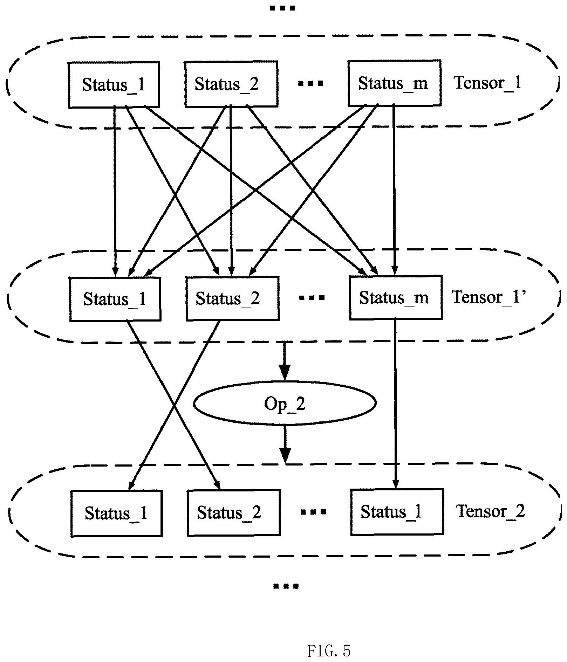

In this step, the glue operator is used to express the behavior of adjusting the splitting state of tensor data. The computational scale of each layer of the neural network model changes with the extension of the network. The splitting trend of the neural network model requires adjustments to the way the operator is split, that is, adjustments to the state of intermediate results. As shown in FIG. 5, a glue operator is added between Op_2 of FIG. 3 and the input Tensor1 of Op_2, which can convert any splitting state of tensor data into another splitting state. The input tensor data and output tensor data of the glue operator have the same shape and the same state space. From any splitting state of the input tensor data, there is a directed edge pointing to all splitting states of the output tensor data, so a fully connected network structure is formed between the splitting state set of the input tensor data and the splitting state set of the output tensor data. This allows the splitting state of any input tensor data to be converted to another splitting state before the operator Op_2, and offers the possibility of adjusting the splitting state of input tensor data of an operator before the computation of the operator starts, which is also the possibility of adjusting the splitting method of the operator, to the search space of the splitting plan $P$.

It should be noted that FIG. 5 shows that a glue operator is inserted between the operator and the corresponding input tensor data. A glue operator may also be inserted between the operator and the corresponding output tensor data, or may be inserted between the operator and the input tensor data and between the operator and the output tensor data. The situation above only shows some examples and is not an exhaustive list. Those skilled in the art may make changes or transformations to the technical scheme of the present disclosure based on their understanding of the essence of the technical scheme of the disclosure. However, as long as the functions and technical effects realized by the changes or transformations are similar to those of this disclosure, they should all fall within the protection scope of this disclosure.

By inserting a glue operator between the operator of the target layer of the neural network model and the associated splitting state set, the splitting method of the operator can be adjusted accordingly, however, this adjustment will bring additional overhead. How to appropriately insert a glue operator to the entire neural network model to improve the performance of the neural network model has become a problem. In order to solve this problem, the following method may be used: inserting a glue operator between the operator of the target layer of the neural network model and the associated splitting state set to obtain a directed acyclic graph of the neural network model that includes the glue operator; according to the directed acyclic graph, traversing the splitting state sets corresponding to all tensor data of the target layer, and determining a state path between adjacent splitting state sets and a weight of the state path; according to the weight of the state path, determining a splitting path of the target layer of the neural network model that includes the glue operator; and using the splitting path of the target layer of the neural network model that includes the glue operator to select the respective glue operators inserted to the target layer, removing the glue operator that does not need to be inserted and keeping the glue operator that needs to be inserted.

A glue operator uses one of the following four implementation manners: split-splice, splice-split, splice, and split. In the splicing stage, a glue operator can splice adjacent sub-data blocks in any dimension into a new data block. In the splitting stage, a glue operator can split any sub-data block into two smaller sub-data blocks. Any splitting form can be converted into another splitting form through this two-stage process. To illustrate this point, it is assumed that the data is one-dimensional. The splitting form before adjustment is expressed as $\{(0, p_1), (p_1, p_2), ..., (p_{n-1}, end)\}$, where each segment represents a sub-segment after the one-dimensional data is split. The splitting form after adjustment is $\{(0, q_1), (q_1, q_2), ..., (q_{m-1}, end)\}$. If two adjacent segments before adjustment $(p_{i-1}, p_1), (p_i, p_{i+1})$ is the segment $(q_j, q_{j+1})$ after adjustment, that is, $p_{i-1}= q_j, p_{i+1}= q_{j+1}$. When adjusting this part, it is only needed to splice $(p_{i-1}, p_i), (p_i, p_{i+1})$ together in the splicing stage and skip the splitting stage. Similarly, in another case, if a sub-segment before adjustment is a set of several sub-segments after adjustment, the splicing stage is skipped and the splitting is performed in the splitting stage. In a worst case, all data can be combined into a complete one-dimensional data in the splicing stage, and the splitting is performed in the splicing stage.

In an example that the glue operator adopts the split-splice or splice-split method, it is supposed that the total size of tensor data to be adjusted is M, neither of the two stages can be skipped, and splicing or splitting must be performed on 4 dimensions in each of the stages. In order to facilitate portability, splicing and splitting are usually implemented by using a concatenation operator (Concat) and a splitting operator (Slice) that come with the neural network algorithm. Since these two operators can only handle one dimension at a time, a glue operator may cause an 8M storage read and write overhead in a worst case. Therefore, it is necessary to find an optimal balance point between adjustment of the splitting state and the resulting additional overhead, and then adjustments can be made to the splitting method of the operator in a place conforming to the rules of the network structure in a case of introducing as few glue operators as possible.

In further detail, the glue operator and an ordinary neural network operator are subject to the same processing. When each glue operator adjusts the splitting state of tensor data, the glue operator has the corresponding time $t$, which is used as the weight of the corresponding state path. The formula (5) is again used to obtain a target splitting path from the unsplit state $s_{root}$ of input tensor data of the entire neural network model that includes the glue operator to the unsplit state $s_{end}$ of output tensor data of the neural network model. When the glue operator is selected, in the splitting path, a splitting state corresponding to the input tensor data of each glue operator and a splitting state corresponding to the output tensor data are checked. If the two splitting states are the same, that is, the splitting state status_1 in the splitting state set Tensor_1 shown in FIG. 5 is connected to the splitting state status_1 in the splitting state set Tensor_1' through the state path, and the two splitting states are considered the same. It shows that the splitting path $P$ of the target layer of the neural network model does not need to adjust the splitting state of the input tensor data of the operator Op_2, which is a result based on the consideration of neighboring operators and the overall performance. The glue operator inserted between the operator Op_2 and the corresponding input tensor data will be removed from the network. Otherwise, the inserted glue operator needs to be retained.

It should be noted that the implementation of the glue operator uses the original operator in the neural network model. The splicing stage corresponds to the Concat operator in the neural network model, and the splitting stage corresponds to the Slice operator in the neural network model. Any accelerator that already supports these two operators can quickly implement the glue operator. Moreover, in this embodiment, the above method of obtaining the target splitting path is similar to the Viterbi algorithm. The embodiment only list some rather than all examples. Those skilled in the art may make modifications and changes based on the understanding of the essence of the technical solution of this disclosure. An example of such modifications and changes may be: the weight of each splitting path from the splitting state set of the input tensor data of the neural network model to the splitting state set of the output tensor data of the neural network model is determined according to the sum of the weights of corresponding state paths. A threshold can be set based on experience. When the weight of a splitting path is less than a preset threshold, the splitting path can serve as a target splitting path for splitting the neural network model. However, as long as the functions and technical effects realized by a method are similar to those of this disclosure, the method should all fall within the protection scope of this disclosure.

It should be emphasized that the technical scheme of operator splitting shown in FIG. 2 is applicable to the technical scheme shown in FIG. 4, which will not be repeated herein.

The convolution operator is a special operator for a neural network model. In some cases, additional auxiliary operators are needed to complete a splitting task. When the computation is divided according to the H/W dimension of the input tensor data, if the size of the convolution kernel window exceeds the stride of each movement thereof, that is, kernel > stride, then during the computation, there is a case where the window boundary of the split convolution operator moves outside the boundary of the tensor data, and the missing part of the data is located in the adjacent sub-tensor data. In order to deal with the overlap of input tensor data of sub-tasks while ensuring portability, the behavior of requiring access to the boundary data of adjacent sub-tensor data is separated to form a new auxiliary operator, which is called a compensation operator.

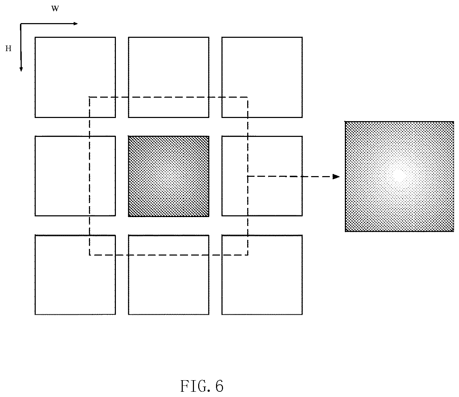

As shown in FIG. 6, the compensation operator is used to obtain target data from adjacent sub-tensor data except one piece of sub-tensor data, and merge the target data and the sub-tensor data to form a larger piece of data. In this case, during the computation stage, the moving range of the window will not exceed the boundary of this compensated data block. In addition to the convolution operator, the pooling operator and the currently less common local response normalization (LRN) operator also have the problem that a split subtask depends on data on an adjacent data block. The pooling operator is similar to the convolution operator. The problem is mainly because the pooling window is larger than the stride of the window. However, the LRN operator is different. The computational logic of the LRN operator is: to compute a result of a point of the output tensor data in the C dimension, the value of the corresponding point of the input tensor data in the C dimension and the values of $k/2$ points located to the left and right of the point are required. Therefore, if the computation of the LRN operator is to be divided into a plurality of LRN operators according to the C dimension, each new operator also needs the element data in the adjacent sub-tensor data to compute the value at the C dimension boundary.

When an operator computes the data of output tensor data in a certain dimension, the computation requires the data range of input tensor data in the dimension. According to this data range, operators can be divided into three types. A first type is the point-to-point operator, which is an operator that only requires the value of a corresponding data point of the input tensor in order to compute a data point of the output tensor data. This type of operator includes activation operator (Relu, pRelu), batch normalization operator (BatchNorm), and basic operator of bitwise addition, subtraction, multiplication and division (Add, Sub, Mult, Div). This type of operator can perform task splitting in any dimension, and the resulting sub-operators only need the corresponding sub-tensor data as input in the computation stage. A second type is the fully dependent operator, which is an operator that requires all values of the input tensor in a dimension in order to compute a data point of the output tensor data. For example, the convolution operator and the fully connected operator require all data points of the input tensor in the C dimension in order to compute a data point of the output tensor data in the C dimension, though the splitting of the convolution operator in the input C dimension can be realized by accumulating the partial sum afterwards, when the computational logic of the operator in the C dimension gets more complex, such as in the case of the normalized exponential regression operator (Softmax), the formula (6) can be used for the computation in the normalized dimension.

$$O_i = \frac{e^{I_i}}{\sum_j e^{I_j}} \tag{6}$$

$I$ denotes the vector of the input tensor data in the normalized dimension, and $O$ is the vector of the output tensor data in the normalized dimension. Different from the accumulation of partial sum of convolution, the computational logic here is more complex and is difficult to be split. From this perspective, the compensation operator is actually used to deal with a third case between the point-to-point operator and the fully dependent operator. In this case, to compute a data point of the output tensor data, the data of the input tensor data in the area near the corresponding position is required. The area near the corresponding position is determined according to compensation parameters. In this case, the operator can still be split in the computational logic, though they will rely on data other than the sub-tensor data, which can be solved by the use of compensation operators.

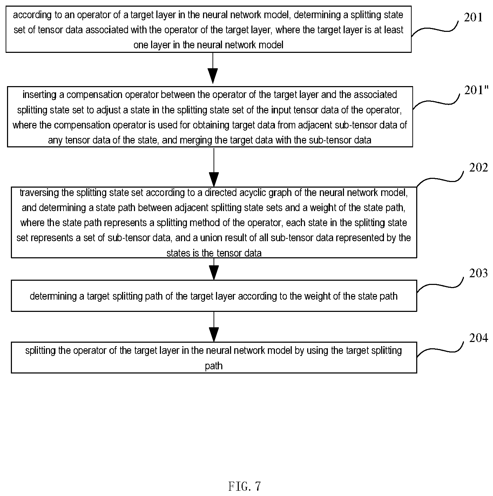

Based on this, as shown in FIG. 7, a third flowchart of a neural network model splitting method according to an embodiment of the present disclosure is provided. On the basis of FIG. 2, the method further includes:
step 201": inserting a compensation operator between the operator of the target layer and the associated splitting state set to adjust a state in the splitting state set of the input tensor data of the operator, where the compensation operator is used for obtaining target data from adjacent sub-tensor data of any tensor data of the state, and merging the target data with the sub-tensor data.

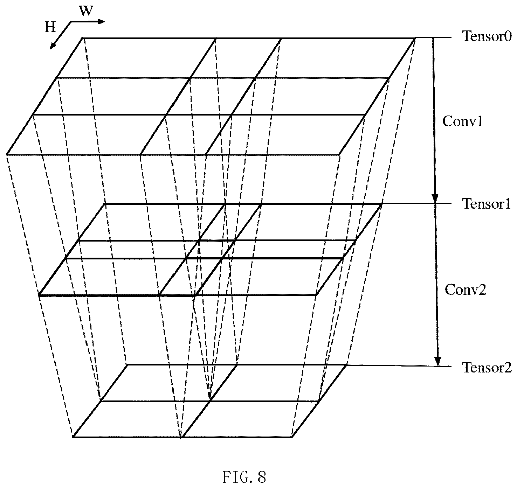

In this technical solution, in order to solve the problem that the window of the convolution operator and the pooling operator goes outside the boundary of the input sub-tensor data when task splitting is performed along the H/W dimension because the window is smaller than the displacement stride, the framework introduces a compensation operator. Before the computation starts, for a sub-tensor data set, the elements of adjacent sub-tensor data are added around each sub-tensor data. This method avoids modifying the computational logic of the split convolution operator or the pooling operator, so that the dependent behavior on the adjacent sub-tensor data is invisible to the convolution operator or the pooling operator, which is conducive to the rapid implementation of this system and can make the system consistent in accelerators of different structures. However, the compensation operator will bring additional overhead. If it is assumed that the size of a data block is originally M, if the overlap between sub-tensor data after compensation is not considered, a compensation operator may introduce memory access overhead of 2M. The convolution operator and the pooling operator are the main operators that make up a neural network, especially an image classification neural network. In order to reduce the overhead caused by the compensation behavior, compensation operators inserted to a network are combined in a pyramid structure. As shown in FIG. 8, the neural network model is a serial sequence composed of two convolution operators. Task splitting is performed on the two convolution operators according to the H/W dimension. Each of the two convolution operators is split into 4 smaller convolution operators. The N dimension and the C dimension of the data are not shown in the figure. If it is assumed that the convolution kernel sizes of the two convolution operators are $k_1$ and $k_2$, to simplify the computation, the displacement strides are both 1. Under normal circumstances, the width of data compensated by the convolution operator Conv1 at the periphery of sub-tensor data before computation is $k_1/2$, which ensures that the convolution kernel will not exceed the boundary of input sub-tensor data during the computation of a split convolution task. However, in the case shown in FIG.8, the width of data compensated by the convolution operator Conv1 at the periphery of sub-tensor data before computation is $k_1/2+ k_2/2$, which results in an overlap of $k_2$ in width between the sub-tensor data of output data Tensor1 of the operator, so the convolution operator Conv2 does not need to perform data compensation on its input sub-tensor data before computation starts.

In this way, a plurality of compensation operators used in the serial operator sequence can be combined into one at the top. Although this makes the memory access overhead of the first compensation larger, in a case where the compensation width is much smaller than the size of the sub-data block, the memory access overhead of the compensation operator after the model is split can be effectively reduced. But on the other hand, this method may lead to repeated computations. The result of the overlap of the sub-tensor data of the output tensor data Tensor1 of the convolution operator Conv1 in FIG. 8 is computed in a plurality of split convolution operators. In addition, for a convolutional network with a small input feature image size, since the condition that the compensation width is much smaller than the size of sub-tensor data is no longer satisfied, it is necessary to carefully evaluate the change of the total memory access overhead before and after combining a plurality of compensation operators. To solve this problem, the combining of compensation operators is also added to the search space of the splitting plan. The entire traversal process changes from forward traversal to back traversal. The two inputs are similar in principle, but the latter is more suitable for the search strategy after the introduction of compensation operators. It is assumed that the unsplit state of the output tensor data of the entire neural network model is an end state $s_{end}$. A state s of a piece of tensor data in the neural network model has a corresponding splitting path that is from s to $s_{end}$, and the weight of the splitting path is $l_s$. Before the traversal starts, the weight corresponding to $s_{end}$ is 0, and the weight corresponding to all states of all remaining tensor data is $\infty$. According to the topological relationship of the neural network model, each operator is traversed backwards. During the process of enumerating the possible splitting states of input tensor data according to the splitting state of output tensor data, in addition to enumerating the splitting states where sub-tensor data do not overlap with each other and require the introduction of the compensation process under normal circumstances, the input splitting states where sub-tensor data overlap with each other and do not require the introduction of the compensation process also need to be enumerated. In the computation of the weight of a state path corresponding to the latter, the time added by redundant computations is also considered. The formula (5) is again used to obtain a target splitting path from the unsplit state $s_{root}$ of input tensor data of the entire neural network model that includes the compensation operator to the unsplit state $s_{end}$ of output tensor data of the neural network model.

For the compensation operator, if a plurality of compensation operators inserted to the neural network model are combined by using a pyramid structure, a combined compensation operator can be obtained, or a plurality of combined compensation operators can be obtained. In this case, the count of compensation operators after combining is less than the count of compensation operators before combining.

It should be noted that the above method of obtaining the target splitting path is similar to the Viterbi algorithm.

The embodiments only list some rather than all examples. Those skilled in the art may make modifications and changes based on the understanding of the essence of the technical solution of this disclosure. An example of such modifications and changes may be: the weight of each splitting path from the splitting state set of the input tensor data of the neural network model to the splitting state set of the output tensor data of the neural network model is determined according to the sum of the weights of corresponding state paths. A threshold can be set based on experience. When the weight of a splitting path is less than a preset threshold, the splitting path can serve as a target splitting path for splitting the neural network model. However, as long as the functions and technical effects realized by a method are similar to those of this disclosure, the method should all fall within the protection scope of this disclosure.

It should be emphasized that the technical scheme of operator splitting shown in FIG. 2 is applicable to the technical scheme shown in FIG. 7, which will not be repeated herein.

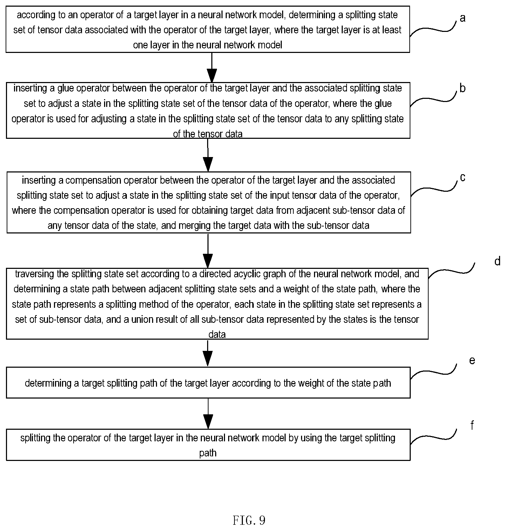

FIG. 9 is a fourth flowchart of a neural network model splitting method according to an embodiment of the present disclosure. The glue operator and the compensation operator are both introduced to an operator splitting plan. In this case, the splitting method includes:

step a): according to an operator of a target layer in a neural network model, determining a splitting state set of tensor data associated with the operator of the target layer, where the target layer is at least one layer in the neural network model;

step b): inserting a glue operator between the operator of the target layer and the associated splitting state set to adjust a state in the splitting state set of the tensor data of the operator, where the glue operator is used for adjusting a state in the splitting state set of the tensor data to any splitting state of the tensor data;

step c): inserting a compensation operator between the operator of the target layer and the associated splitting state set to adjust a state in the splitting state set of the input tensor data of the operator, where the compensation operator is used for obtaining target data from adjacent sub-tensor data of any tensor data of the state, and merging the target data with the sub-tensor data;

step d): traversing the splitting state set according to a directed acyclic graph of the neural network model, and determining a state path between adjacent splitting state sets and a weight of the state path, where the state path represents a splitting method of the operator, each state in the splitting state set represents a set of sub-tensor data, and a union result of all sub-tensor data represented by the states is the tensor data;

step e): determining a target splitting path of the target layer according to the weight of the state path; and

a step f): splitting the operator of the target layer in the neural network model by using the target splitting path.

A glue operator is inserted between each operator of the neural network model and its input tensor data, and also between the output tensor data of the neural network model and the operator that generates the output tensor data. The state set $S_i$ is initialized for each tensor data $tensor_i$ in the neural network model. A value pair (s, $t$) is used to denote the storage state in the state set and the shortest time taken to execute from the splitting state of the data to the output state $s_{root}$ of the last output data of the network. The state set $S_{root}$ corresponding to the output tensor data of the entire neural network model includes the unsplit state of the data and the corresponding shortest time ($s_{root}$, 0). All the other sets are empty. For a given neural network model, a topological order $\lambda$ is given to all operators in the neural network model according to their dependence on each other. The topological order should satisfy the following condition: for an operator A, all operators that depend on $A$ must come after $A$ in the topological order, and all operators that A depends on must come before A in topological order.

Taking into account the insertion of the compensation operator, the splitting state set of each operator of the neural network model is traversed reversely. In the reverse traversal stage, the operators in the neural network model are traversed one by one following the order of reversed $\lambda$. For the operator A that has $m$ inputs and $n$ outputs, there are input tensor data $u_1, \ldots, u_m$, and output tensor data $v_1, \ldots, v_n$. The technical solution of operator splitting in a neural network model shown in FIG. 2 is applicable to the technical solution shown in FIG. 9. The technical solution of glue operator in a neural network model where a glue operator is inserted shown in FIG. 4 is applicable to the technical solution shown in FIG. 9. The technical solution of compensation operator in a neural network model where a compensation operator is inserted shown in FIG. 7 is applicable to the technical solution shown in FIG. 9. The above are not repeated herein. The time complexity of the back traversal is $O(NM^2)$, where N denotes the count of operators in the neural network model, and M denotes the count of states in the largest splitting state set in the splitting state sets of all tensor data.

It should be emphasized that the technical solution of operator splitting shown in FIG. 2 is applicable to the technical solution shown in FIG. 9, the content about the glue operator in the technical solution of operator splitting based on the glue operator shown in FIG. 4 is applicable to the technical solution shown in FIG. 9, and the content about the compensation operator in the technical solution of operator splitting based on the compensation operator shown in FIG. 7 is applicable to the technical solution shown in FIG. 9, which will not be repeated here.

The technical solutions shown in FIG. 2, FIG. 4, FIG. 7, and FIG. 9 make full use of the hardware resources of a multi-core system by splitting each operator of a target layer in a neural network model into smaller sub-tasks and assigning them to a plurality of cores for parallel execution. In the technical solutions shown in FIG. 4, FIG. 7, and FIG. 9, the introduction of the glue operator or compensation operator ensures that the computation graph of a neural network model after splitting can still be realized by the operator kernel function of a single core, which avoids the need to modify or re-implement the software stack of a large number of operators by the underlying accelerator during the porting of the framework, making it more friendly to accelerators that do not have good programmability. The framework can automatically generate a set of efficient splitting schemes for a given neural network and multi-core accelerator. During the generation of the schemes, the operator splitting method can be reasonably adjusted according to the type and scale of the operator as well as the computational throughput rate and the memory access bandwidth of the underlying hardware. The framework will achieve a good balance between the computational efficiency of the hardware core and the splitting degree of the operator, and will also take into account the coordination between the operators in the context during the splitting to make an overall plan for the splitting of a plurality of operators.

The present disclosure provides a neural network model splitting apparatus which includes:

a splitting state set module configured to, according to an operator of a target layer in a neural network model, determine a splitting state set of tensor data associated with the operator of the target layer, where the target layer is at least one layer in the neural network model;

a state path module configured to traverse the splitting state set according to a directed acyclic graph of the neural network model, and determine a state path between adjacent splitting state sets and a weight of the state path, where the state path represents a splitting method of the operator, each state in the splitting state set represents a set of sub-tensor data, and a union result of all sub-tensor data represented by the states is the tensor data;

a target splitting path module configured to determine a target splitting path of the target layer according to the weight of the state path; and

a splitting module configured to split the operator of the target layer in the neural network model by using the target splitting path.

Optionally, the target splitting path module includes:

a first traversal unit configured to traverse all splitting state sets of the target layer, and for a current splitting state set, traverse each state to obtain all state paths pointing to the current state and a splitting path from a starting state of the state paths pointing to the current state to a starting state of input tensor data of the target layer;

a first splitting path determination unit configured to determine a splitting path from the current state to the starting state of the input tensor data of the target layer according to weights of the state paths and a weight of the splitting path, where the weight of the splitting path is determined according to the weights of all the state paths corresponding to the splitting path; and

a first target splitting path selection unit configured to, after traversing all the splitting state sets of the target layer, obtain a target splitting path between the splitting state set of the input tensor data of the target layer and the splitting state set of output tensor data of the target layer.

Optionally, the target splitting path module includes:

a second traversal unit configured to traverse all splitting state sets of the target layer, and for a current splitting state set, traverse each state to obtain all state paths starting from the current state and a splitting path from an end state of the state paths starting from the current state to an end state of output tensor data of the target layer;

a second splitting path determination unit configured to determine a splitting path from the current state to an end state of the output tensor data of the target layer according to weights of the state paths and a weight of the splitting path, where the weight of the splitting path is determined according to the weights of all the state paths corresponding to the splitting path; and

a second target splitting path selection unit configured to, after traversing all the splitting state sets of the target layer, obtain a target splitting path between the splitting state set of the input tensor data of the target layer and the splitting state set of output tensor data of the target layer.

Optionally, the apparatus also includes:
a first splitting state set optimization module configured to, in the forward traversal phase, when the output tensor data of the operator is used as input tensor data by at least two operators, or the operator has at least two output tensor data, retain one splitting state in the splitting state set of the output tensor data of the operator, where the splitting state is determined according to the same state path of the operator.

Optionally, the apparatus also includes:

a second splitting state set optimization module configured to, in the back traversal phase, when the operator has at least two input tensor data, retain one splitting state in the splitting state set of the input tensor data of the operator, where the splitting state is determined according to the same state path of the operator.

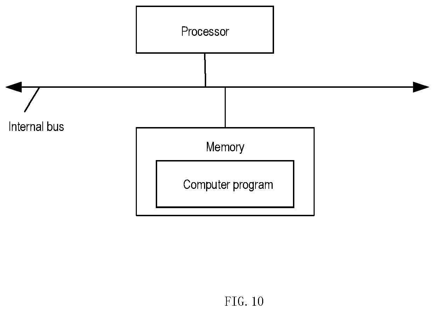

FIG. 10 is a schematic diagram of hardware equipment for neural network model splitting according to an embodiment of the present disclosure. The hardware equipment includes a memory, a processor, and a computer program stored in the memory and can run on the processor. The processor executes the computer program to implement the above-mentioned neural network model splitting method.

An embodiment of this specification provides a neural network model splitting hardware device. The specific functions implemented by the memory and processor of the device can be explained by the foregoing embodiments of this specification, and can achieve the technical effects of the foregoing embodiments, which is not repeated herein.

To overcome the above technical problems, a neural network model splitting method and related products are also proposed. In addition to the description of the neural network model splitting apparatus, the descriptions of the splitting method and related products are the same as those described in the above embodiments, which will not be repeated herein. The description of the neural network model splitting apparatus is as follows.

The present disclosure provides a neural network model splitting apparatus which includes:

a splitting state set determining module configured to, according to an operator of a target layer in a neural network model, determine a splitting state set of tensor data associated with the operator of the target layer, where the target layer is at least one layer in the neural network model;

a glue operator inserting module configured to insert a glue operator between the operator of the target layer and the associated splitting state set to adjust a state in the splitting state set of the tensor data of the operator, where the glue operator is used for adjusting a state of the tensor data that is obtained by using a splitting manner to another state that is obtained by using another splitting manner;

a state path determining module configured to traverse the splitting state set according to a directed acyclic graph of the neural network model, and determine a state path between adjacent splitting state sets and a weight of the state path, where the state path represents a splitting method of the operator, each state in the splitting state set represents a set of sub-tensor data, and a union result of all sub-tensor data represented by the states is the tensor data;

a target splitting path determining module configured to determine a target splitting path of the target layer according to the weight of the state path; and

a splitting module configured to split the operator of the target layer in the neural network model by using the target splitting path.

Optionally, the target splitting path determination module includes:

a first traversal unit configured to traverse all splitting state sets of the target layer, and for a current splitting state set, traverse each state to obtain all state paths pointing to the current state and a splitting path from a starting state of the state paths pointing to the current state to a starting state of input tensor data of the target layer;

a first splitting path determination unit configured to determine a splitting path from the current state to the starting state of the input tensor data of the target layer according to weights of the state paths and a weight of the splitting path, where the weight of the splitting path is determined according to the weights of all the state paths corresponding to the splitting path; and

a first target splitting path selection unit configured to, after traversing all the splitting state sets of the target layer, obtain a target splitting path between the splitting state set of the input tensor data of the target layer and the splitting state set of output tensor data of the target layer.

Optionally, the target splitting path determination module includes:

a second traversal unit configured to traverse all splitting state sets of the target layer, and for a current splitting state set, traverse each state to obtain all state paths starting from the current state and a splitting path from an end state of the state paths starting from the current state to an end state of output tensor data of the target layer;

a second splitting path determination unit configured to determine a splitting path from the current state to an end state of the output tensor data of the target layer according to weights of the state paths and a weight of the splitting path, where the weight of the splitting path is determined according to the weights of all the state paths corresponding to the splitting path; and

a second target splitting path selection unit configured to, after traversing all the splitting state sets of the target layer, obtain a target splitting path between the splitting state set of the input tensor data of the target layer and the splitting state set of output tensor data of the target layer.

Optionally, the glue operator insertion module includes:

an insertion unit configured to insert a glue operator between the operator of the target layer and the associated splitting state set to obtain a directed acyclic graph of the neural network model that includes the glue operator;
a state path unit configured to traverse the splitting state sets of all tensor data of the target layer according to the directed acyclic graph, and determine a state path between adjacent splitting state sets and a weight of the state path;
a target splitting path determination module configured to determine a target splitting path of the target layer of the neural network model that includes the glue operator according to the weight of the state path; and
a selection unit configured to use the target splitting path of the target layer of the neural network model that includes the glue operator to perform selection on the respective glue operators inserted to the target layer, remove the glue operator that does not need to be inserted and keep the glue operator that needs to be inserted.

Optionally, the glue operator inserted by the glue operator insertion module is used to splice the states in the splitting state set of the input tensor data of the glue operator.

Optionally, the glue operator inserted by the glue operator insertion module is used to split the states in the splitting state set of the input tensor data of the glue operator.

Optionally, the glue operator inserted by the glue operator insertion module is used to splice the states in the splitting state set of the input tensor data of the glue operator, and then split the spliced states in the splitting state set.

Optionally, the glue operator inserted by the glue operator insertion module is used to split the states in the splitting state set of the input tensor data of the glue operator, and then splice the split states in the splitting state set.

Optionally, the apparatus also includes:

a first splitting state set optimization module configured to, in the forward traversal phase, when the output tensor data of the operator is used as input tensor data by at least two operators, or the operator has at least two output tensor data, retain one splitting state in the splitting state set of the output tensor data of the operator, where the splitting state is determined according to the same state path of the operator.

Optionally, the apparatus also includes:

a second splitting state set optimization module configured to, in the back traversal phase, when the operator has at least two input tensor data, retain one splitting state in the splitting state set of the input tensor data of the operator, where the splitting state is determined according to the same state path of the operator.

To overcome the above technical problems, a neural network model splitting method and related products are also proposed. In addition to the description of the neural network model splitting apparatus, the descriptions of the splitting method and related products are the same as those described in the above embodiments, which will not be repeated herein. The description of the neural network model splitting apparatus is as follows.

The present disclosure provides a neural network model splitting apparatus which includes:

a splitting state set module configured to, according to an operator of a target layer in a neural network model, determine a splitting state set of tensor data associated with the operator of the target layer, where the target layer is at least one layer in the neural network model;
a compensation operator insertion module configured to insert a compensation operator between the operator of the target layer and the associated splitting state set to adjust a state in the splitting state set of the input tensor data of the operator, where the compensation operator is used for obtaining target data from adjacent sub-tensor data of any tensor data of the state, and merging the target data with the sub-tensor data;
a state path module configured to traverse the splitting state set according to a directed acyclic graph of the neural network model, and determine a state path between adjacent splitting state sets and a weight of the state path, where the state path represents a splitting method of the operator, each state in the splitting state set represents a set of sub-tensor data, and a union result of all sub-tensor data represented by the states is the tensor data;
a target splitting path module configured to determine a target splitting path of the target layer according to the weight of the state path; and
a splitting module configured to split the operator of the target layer in the neural network model by using the target splitting path.

Optionally, the compensation operator insertion module includes:

an insertion unit configured insert a compensation operator between a specific type of operator in the target layer and the associated splitting state set of input tensor data, where the characteristic of the specific type of operator is: being used for computing the element of the input tensor data corresponding to the element of the output tensor data of this type of operator, and also being used for computing the adjacent element of the element of the output tensor data.

Optionally, the specific type of operator that is applicable to the compensation operator inserted by the insertion unit includes convolution operator, pooling operator, and LRN operator.

Optionally, the compensation operator insertion module also includes:
a combination unit configured to combine a plurality of compensation operators in the target layer in a pyramid structure.
Optionally, the target splitting path determination module includes:

a traversal unit configured to traverse all splitting state sets of the target layer, and for a current splitting state set, traverse each state to obtain all state paths starting from the current state and a splitting path from an end state of the state paths starting from the current state to an end state of output tensor data of the target layer;
a splitting path determination unit configured to determine a splitting path from the current state to an end state of the output tensor data of the target layer according to weights of the state paths and a weight of the splitting path, where the weight of the splitting path is determined according to the weights of all the state paths corresponding to the splitting path; and
a target splitting path selection unit configured to, after traversing all the splitting state sets of the target layer, obtain a target splitting path between the splitting state set of the input tensor data of the target layer and the splitting state set of output tensor data of the target layer.

Optionally, the neural network model splitting apparatus further includes:
a first splitting state set optimization module configured to, in the forward traversal phase, when the output tensor data of the operator is used as input tensor data by at least two operators, or the operator has at least two output tensor data, retain one splitting state in the splitting state set of the output tensor data of the operator, where the splitting state is determined according to the same state path of the operator.
Optionally, the neural network model splitting apparatus further includes:
a second splitting state set optimization module configured to, in the back traversal phase, when the operator has at least two input tensor data, retain one splitting state in the splitting state set of the input tensor data of the operator, where the splitting state is determined according to the same state path of the operator.
To overcome the above technical problems, a neural network model splitting method and related products are also proposed. In addition to the description of the neural network model splitting apparatus, the descriptions of the splitting method and related products are the same as those described in the above embodiments, which will not be repeated herein. The description of the neural network model splitting apparatus is as follows.
The present disclosure provides a neural network model splitting apparatus which includes:

a splitting state set module configured to, according to an operator of a target layer in a neural network model, determine a splitting state set of tensor data associated with the operator of the target layer, where the target layer is at least one layer in the neural network model;
a glue operator insertion module configured to insert a glue operator between the operator of the target layer and the associated splitting state set to adjust a state in the splitting state set of the tensor data of the operator, where the glue operator is used for adjusting a state of the tensor data that is obtained by using a splitting manner to another state that is obtained by using another splitting manner;
a compensation operator insertion module configured to insert a compensation operator between the operator of the target layer and the associated splitting state set to adjust a state in the splitting state set of the input tensor data of the operator, where the compensation operator is used for obtaining target data from adjacent sub-tensor data of any tensor data of the state, and merging the target data with the sub-tensor data;
a state path module configured to traverse the splitting state set according to a directed acyclic graph of the neural network model, and determine a state path between adjacent splitting state sets and a weight of the state path, where the state path represents a splitting method of the operator, each state in the splitting state set represents a set of sub-tensor data, and a union result of all sub-tensor data represented by the states is the tensor data;
a target splitting path module configured to determine a target splitting path of the target layer according to the weight of the state path; and
a splitting module configured to split the operator of the target layer in the neural network model by using the target splitting path.

Optionally, the glue operator insertion module includes:

a first insertion unit configured to insert a glue operator between the operator of the target layer and the associated splitting state set to obtain a directed acyclic graph of the neural network model that includes the glue operator;
a state path unit configured to traverse the splitting state sets of all tensor data of the target layer according to the directed acyclic graph, and determine a state path between adjacent splitting state sets and a weight of the state path;
a first target splitting path determination module configured to determine a target splitting path of the target layer of the neural network model that includes the glue operator according to the weight of the state path; and

a selection unit configured to use the target splitting path of the target layer of the neural network model that includes the glue operator to perform selection on the respective glue operators inserted to the target layer, remove the glue operator that does not need to be inserted and keep the glue operator that needs to be inserted.

Optionally, the glue operator inserted by the glue operator insertion module is used to splice the states in the splitting state set of the input tensor data of the glue operator.

Optionally, the glue operator inserted by the glue operator insertion module is used to split the states in the splitting state set of the input tensor data of the glue operator.

Optionally, the glue operator inserted by the glue operator insertion module is used to splice the states in the splitting state set of the input tensor data of the glue operator, and then split the spliced states in the splitting state set.

Optionally, the glue operator inserted by the glue operator insertion module is used to split the states in the splitting state set of the input tensor data of the glue operator, and then splice the split states in the splitting state set.

Optionally, the compensation operator insertion module includes:

a second insertion unit configured insert a compensation operator between a specific type of operator in the target layer and the associated splitting state set of input tensor data, where the characteristic of the specific type of operator is: being used for computing the element of the input tensor data corresponding to the element of the output tensor data of this type of operator, and also being used for computing the adjacent element of the element of the output tensor data.

Optionally, the specific type of operator that is applicable to the compensation operator inserted by the second insertion unit includes convolution operator, pooling operator, and LRN operator.

Optionally, the compensation operator insertion module also includes:

a combination unit configured to combine a plurality of compensation operators in the target layer in a pyramid structure.

Optionally, the target splitting path determination module includes:

a traversal unit configured to traverse all splitting state sets of the target layer, and for a current splitting state set, traverse each state to obtain all state paths starting from the current state and a splitting path from an end state of the state paths starting from the current state to an end state of output tensor data of the target layer;

a splitting path determination unit configured to determine a splitting path from the current state to an end state of the output tensor data of the target layer according to weights of the state paths and a weight of the splitting path, where the weight of the splitting path is determined according to the weights of all the state paths corresponding to the splitting path; and

a second target splitting path determination unit configured to, after traversing all the splitting state sets of the target layer, obtain a target splitting path between the splitting state set of the input tensor data of the target layer and the splitting state set of output tensor data of the target layer.

Optionally, the apparatus also includes:

a first splitting state set optimization module configured to, in the forward traversal phase, when the output tensor data of the operator is used as input tensor data by at least two operators, or the operator has at least two output tensor data, retain one splitting state in the splitting state set of the output tensor data of the operator, where the splitting state is determined according to the same state path of the operator.

Optionally, the apparatus also includes:

a second splitting state set optimization module configured to, in the back traversal phase, when the operator has at least two input tensor data, retain one splitting state in the splitting state set of the input tensor data of the operator, where the splitting state is determined according to the same state path of the operator.

In this embodiment, the memory may include a physical apparatus for storing information, which usually digitizes information and then stored the information in a medium using electrical, magnetic, or optical methods. The memory described in this embodiment may also include: an apparatus that uses electrical energy to store information, such as RAM and ROM; an apparatus that uses magnetic energy to store information, such as hard disk, floppy disk, magnetic tape, magnetic-core memory, bubble memory, U disk; and an apparatus that uses optical means to store information, such as CD or DVD. Of course, there are also other types of memory, such as quantum memory, graphene memory, and the like.

In this embodiment, the processor can be implemented in any suitable manner. For example, the processor may take the form of a computer-readable medium, a logic gate, a switch, an application specific integrated circuit (ASIC), a programmable logic controller, and an embedded micro-controller, *etc.,* that includes a micro-processor or a processor as well as a memory that stores computer-readable program codes (such as software or firmware) executable by the micro-processor or processor.

An embodiment of the present disclosure further provides a readable storage medium on which a computer program is stored. When the computer program is executed, the neural network model splitting method described above is realized.

In can be seen that the technical solution provided by the present disclosure can facilitate the expansion of deep learning accelerators from a single-core architecture to a multi-core architecture in the cost of relatively small overhead, and offers a highly-efficient splitting method for a given network and an underlying accelerator. Experimental results show that the technical solution may efficiently decrease the end-to-end latency of different networks on a multi-core accelerator.

Those skilled in the art also know that, in addition to realizing a client end and a server purely by computer-readable program code manner, it is completely possible to logically programming the steps of the method to enable a client end and a server to use the logic gate, the switch, the ASIC, the programmable logic controller, the embedded micro-controller, *etc.,* to realize the same functions. Therefore, such client and server can be regarded as a kind of hardware component. An apparatus included in the hardware component which is used for implementing various functions can also be regarded as a structure inside the hardware component. Or further, an apparatus for realizing various functions can be regarded as both a software module for realizing the method and a structure inside a hardware component.

From the description of the embodiments above, those skilled in the art can clearly understand that the present disclosure may be realized with the support of software as well as necessary universal hardware platform. Based on such understanding, the essence of the technical solutions of the present disclosure, or a part of the present disclosure that contributes to the prior art, can be entirely or partly embodied in the form of a software product that is stored in a memory. The memory includes ROM/RAM, magnetic disk, optical disk, and the like, where several instructions are stored and can enable a computer device (which may be a personal computer, a server, or a network device, *etc.*) to execute the methods described in the various embodiments of the present disclosure or described in some parts of the embodiments.

The various embodiments in this specification are described in a progressive manner, and the description of the same or similar parts between the various embodiments can be seen in different embodiments. Each embodiment focuses on the differences from other embodiments. In particular, embodiments for client end and server can be explained with reference to the descriptions of the foregoing method embodiments.

This disclosure may be described in the general context of computer-executable instructions executed by a computer, such as a program module. Generally, the program module includes routine, program, object, component, data structure, *etc.,* that perform specific tasks or implement specific abstract data types. This disclosure can also be implemented in distributed computing environments. In these distributed computing environments, tasks are performed by remote processing devices connected through a communication network. In the distributed computing environments, the program module can be located in local and remote computer storage media that include storage devices.

Although the disclosure has been described through the embodiments, those of ordinary skill in the art should know that there are many variations and changes of the disclosure without departing from the spirit of the disclosure. The appended claims include these variations and changes without departing from the spirit of the disclosure.

**Claims**

1. A neural network model splitting method comprising:

   according to an operator of a target layer in a neural network model, determining a splitting state set of tensor data associated with the operator of the target layer, wherein the target layer is at least one layer in the neural network model;
   traversing the splitting state set according to a directed acyclic graph of the neural network model, and determining a state path between adjacent splitting state sets and a weight of the state path, wherein the state path represents a splitting method of the operator, each state in the splitting state set represents a set of sub-tensor data, and a union result of all sub-tensor data represented by the states is the tensor data;
   determining a target splitting path of the target layer according to the weight of the state path; and
   splitting the operator of the target layer in the neural network model by using the target splitting path.

2. The method of claim 1, wherein determining the target splitting path of the target layer includes:

   traversing all splitting state sets of the target layer, for a current splitting state set, traversing each state to obtain all state paths pointing to a current state and a splitting path from a starting state of the state paths pointing to the current state to a starting state of input tensor data of the target layer,
   determining a splitting path from the current state to the starting state of the input tensor data of the target layer according to weights of the state paths and a weight of the splitting path, wherein the weight of the splitting path is determined according to the weights of all the state paths corresponding to the splitting path, and

after traversing all the splitting state sets of the target layer, obtaining a target splitting path between the splitting state set of the input tensor data of the target layer and the splitting state set of output tensor data of the target layer.

3. The method of claim 1, wherein determining the target splitting path of the target layer includes:

traversing all splitting state sets of the target layer, for a current splitting state set, traversing each state to obtain all state paths starting from a current state and a splitting path from an end state of the state paths starting from the current state to an end state of output tensor data of the target layer,

determining a splitting path from the current state to an end state of the output tensor data of the target layer according to weights of the state paths and a weight of the splitting path, wherein the weight of the splitting path is determined according to the weights of all the state paths corresponding to the splitting path, and

after traversing all the splitting state sets of the target layer, obtaining a target splitting path between the splitting state set of the input tensor data of the target layer and the splitting state set of output tensor data of the target layer.

4. The method of claim 1, wherein a count of sub-operators obtained after splitting the operator of the target layer in the neural network model is an integer power of 2.

5. The method of claim 1, wherein a state in a splitting state set of input tensor data of the operator of the target layer in the neural network model is determined according to a computational logic of the operator and a state of a splitting state set of corresponding output tensor data.

6. The method of claim 1, wherein a state in a splitting state set of output tensor data of the operator of the target layer in the neural network model is determined according to a computational logic of the operator and a state of a splitting state set of corresponding input tensor data.

7. The method of claim 1, further comprising:
   in a forward traversal phase, when the output tensor data of the operator is used as input tensor data by at least two operators, or the operator has at least two output tensor data, retaining one splitting state in the splitting state set of the output tensor data of the operator, wherein the splitting state is determined according to a same state path of the operator.

8. The method of claim 1, further comprising:
   in a back traversal phase, when the operator has at least two input tensor data, retaining one splitting state in the splitting state set of the input tensor data of the operator, wherein the splitting state is determined according to a same state path of the operator.

9. The method of claim 1, wherein the weight of the state path is determined according to the type and scale of the operator as well as hardware parameters of a multi-core processor.

10. A neural network model splitting apparatus comprising:

    a splitting state set module configured to, according to an operator of a target layer in a neural network model, determine a splitting state set of tensor data associated with the operator of the target layer, wherein the target layer is at least one layer in the neural network model;

    a state path module configured to traverse the splitting state set according to a directed acyclic graph of the neural network model, and determine a state path between adjacent splitting state sets and a weight of the state path, wherein the state path represents a splitting method of the operator, each state in the splitting state set represents a set of sub-tensor data, and a union result of all sub-tensor data represented by the states is the tensor data;

    a target splitting path module configured to determine a target splitting path of the target layer according to the weight of the state path; and

    a splitting module configured to split the operator of the target layer in the neural network model by using the target splitting path.

11. The apparatus of claim 10, wherein the target splitting path module includes:

a first traversal unit configured to traverse all splitting state sets of the target layer, and for a current splitting state set, traverse each state to obtain all state paths pointing to a current state and a splitting path from a starting state of the state paths pointing to the current state to a starting state of input tensor data of the target layer, a first splitting path determination unit configured to determine a splitting path from the current state to the starting state of the input tensor data of the target layer according to weights of the state paths and a weight of the splitting path, wherein the weight of the splitting path is determined according to the weights of all the state paths corresponding to the splitting path, and

a first target splitting path selection unit configured to, after traversing all the splitting state sets of the target layer, obtain a target splitting path between the splitting state set of the input tensor data of the target layer and the splitting state set of output tensor data of the target layer.

12. The apparatus of claim 10, wherein the target splitting path module includes:

a second traversal unit configured to traverse all splitting state sets of the target layer, and for a current splitting state set, traverse each state to obtain all state paths starting from the current state and a splitting path from an end state of the state paths starting from the current state to an end state of output tensor data of the target layer,

a second splitting path determination unit configured to determine a splitting path from the current state to an end state of the output tensor data of the target layer according to weights of the state paths and a weight of the splitting path, wherein the weight of the splitting path is determined according to the weights of all the state paths corresponding to the splitting path, and

a second target splitting path selection unit configured to, after traversing all the splitting state sets of the target layer, obtain a target splitting path between the splitting state set of the input tensor data of the target layer and the splitting state set of output tensor data of the target layer.

13. The apparatus of claim 10, further comprising:
a first splitting state set optimization module configured to, in a forward traversal phase, when the output tensor data of the operator is used as input tensor data by at least two operators, or the operator has at least two output tensor data, retain one splitting state in the splitting state set of the output tensor data of the operator, wherein the splitting state is determined according to the same state path of the operator.

14. A neural network model splitting hardware device comprising a memory and a processor, wherein a computer program executable by the processor is stored in the memory, and the processor realizes the steps of the method of any of claims 1-9 when the processor executes the computer program.

15. A computer readable storage medium, wherein a computer program is stored in the computer readable storage medium, and the steps of the method of any of claims 1-9 are implemented when the computer program is executed by a processor.

| Core1 | Core1 | Core1 | Core1 |

Global Memory

FIG. 1

according to an operator of a target layer in the neural network model, determining a splitting state set of tensor data associated with the operator of the target layer, where the target layer is at least one layer in the neural network model — 201

traversing the splitting state set according to a directed acyclic graph of the neural network model, and determining a state path between adjacent splitting state sets and a weight of the state path, where the state path represents a splitting method of the operator, each state in the splitting state set represents a set of sub-tensor data, and a union result of all sub-tensor data represented by the states is the tensor data — 202

determining a target splitting path of the target layer according to the weight of the state path — 203

splitting the operator of the target layer in the neural network model by using the target splitting path — 204

FIG. 2

FIG. 3

according to an operator of a target layer in the neural network model, determining a splitting state set of tensor data associated with the operator of the target layer, where the target layer is at least one layer in the neural network model

201

inserting a glue operator between the operator of the target layer and the associated splitting state set to adjust a state in the splitting state set of the tensor data of the operator, where the glue operator is used for adjusting a state of the tensor data that is obtained in a splitting manner to another state that is obtained in another splitting manner

201'

traversing the splitting state set according to a directed acyclic graph of the neural network model, and determining a state path between adjacent splitting state sets and a weight of the state path, where the state path represents a splitting method of the operator, each state in the splitting state set represents a set of sub-tensor data, and a union result of all sub-tensor data represented by the states is the tensor data

202

determining a target splitting path of the target layer according to the weight of the state path

203

splitting the operator of the target layer in the neural network model by using the target splitting path

204

FIG. 4

■ ■ ■

FIG. 5

FIG. 6

according to an operator of a target layer in the neural network model, determining a splitting state set of tensor data associated with the operator of the target layer, where the target layer is at least one layer in the neural network model — 201

inserting a compensation operator between the operator of the target layer and the associated splitting state set to adjust a state in the splitting state set of the input tensor data of the operator, where the compensation operator is used for obtaining target data from adjacent sub-tensor data of any tensor data of the state, and merging the target data with the sub-tensor data — 201"

traversing the splitting state set according to a directed acyclic graph of the neural network model, and determining a state path between adjacent splitting state sets and a weight of the state path, where the state path represents a splitting method of the operator, each state in the splitting state set represents a set of sub-tensor data, and a union result of all sub-tensor data represented by the states is the tensor data — 202

determining a target splitting path of the target layer according to the weight of the state path — 203

splitting the operator of the target layer in the neural network model by using the target splitting path — 204

FIG. 7

FIG. 8

according to an operator of a target layer in a neural network model, determining a splitting state set of tensor data associated with the operator of the target layer, where the target layer is at least one layer in the neural network model

a

inserting a glue operator between the operator of the target layer and the associated splitting state set to adjust a state in the splitting state set of the tensor data of the operator, where the glue operator is used for adjusting a state in the splitting state set of the tensor data to any splitting state of the tensor data

b

inserting a compensation operator between the operator of the target layer and the associated splitting state set to adjust a state in the splitting state set of the input tensor data of the operator, where the compensation operator is used for obtaining target data from adjacent sub-tensor data of any tensor data of the state, and merging the target data with the sub-tensor data

c

traversing the splitting state set according to a directed acyclic graph of the neural network model, and determining a state path between adjacent splitting state sets and a weight of the state path, where the state path represents a splitting method of the operator, each state in the splitting state set represents a set of sub-tensor data, and a union result of all sub-tensor data represented by the states is the tensor data

d

determining a target splitting path of the target layer according to the weight of the state path

e

splitting the operator of the target layer in the neural network model by using the target splitting path

f

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910114927
- CN 201910114967
- CN 201910115130
- CN 201910115162